# EUROPEAN PATENT APPLICATION

(11) **EP 4 516 505 A1**
(43) Date of publication of application: **05.03.2025**
(21) Application number: 22939544.7
(22) Date of filing: 02.06.2022
(51) Int. Cl.: B32B 37/10, B32B 37/12, B32B 38/18

(54) **VARIABLE SOLVENTLESS LAMINATING MACHINE BASED ON DIFFERENT LAMINATING STRUCTURES, AND TRANSFORMATION METHOD**

(30) Priority: 29.04.2022 CN 202210466225
(71) Applicant: Sinomech Corporation, Guangzhou, Guangdong 510800 (CN)
(72) Inventor: ZUO, Guangshen, Guangzhou, Guangdong 510800 (CN); LIN, Huaxiang, Guangzhou, Guangdong 510800 (CN); LI, Junhong, Guangzhou, Guangdong 510800 (CN); ZUO, Jinjin, Guangzhou, Guangdong 510800 (CN); HUANG, Shunli, Guangzhou, Guangdong 510800 (CN)
(74) Representative: Haseltine Lake Kempner LLP
(86) International application number: PCT/CN2022/096736
(87) International publication number: WO 2023/206711

(57) **Abstract**

A variable solventless laminating machine based on different laminating structures, and a transformation method. The variable solventless laminating machine comprises four unit sets (1, 2, 3, 4) which are horizontally arranged and a high-position unwinding component the upper part of which is vertically arranged. Four unwinding units (5, 7, 8, 9), three coating units (10, 11, 12), two laminating units (13, 14), one winding unit (6), and a matching control system are provided in total. According to structural characteristics such as the type of a substrate and an order of functional layers of a product to be laminated, appropriate functional units, a feeding path and a control function are selected on the laminating machine, so that combination and matching of the corresponding unwinding units (5, 7, 8, 9), coating units (10, 11, 12), laminating unit (13, 14), tension control units (15, 16, 17, 18, 19, 20, 21, 22, 23) and selected units in a corresponding module in a control program are implemented, so that the machine is transformed into a matching laminating system adapted to a specific laminating structure, for implementing a corresponding laminating process. The laminating machine can be transformed into seven laminating machines having different processes according to types of laminating structures, can respectively meet production requirements of different two-layer, three-layer or four-layer laminating structures, and covers almost all common laminating structures.

## Description

### Technical Field

The present invention relates to the field of solventless lamination, specifically to a variable solventless laminating machine based on different laminating structures and a related method of process-switch.

### Background Art

Common soft packaging laminating films include two-layer webs, three-layer webs, and four-layer webs. Currently, most laminating films with more than two layers are produced using a step-by-step process where two layers are laminated at one time, then unloaded and cured before laminating with a third web. This process is highly inefficient. The emerging triplex laminating machine can complete the lamination of three layers per time, greatly improving production efficiency. However, this type of machine has the following limitations: Firstly, triplex laminating machine cannot accommodate the lamination process for four-layer laminating structures; Secondly, the operation mode and lamination process of each triplex laminating machine are designed for certain fixed types of laminating films, with fixed web coating arrangements and feeding paths, unable to meet the requirements of specific coating arrangements and feeding paths for special webs; Lastly, the operation modes and lamination processes cannot be changed, limiting the machine to only specific types of lamination processes.

### Summary

The technical problem to be solved by this invention is to provide a variable solventless laminating machine and a related method of process-switch based on different laminating structures. The machine's operation modes and lamination processes can be altered to accommodate the production of two-layer, three-layer, and four-layer laminating structures of different types, achieving the goal of versatility with a single machine.

To address the above technical problem, the invention proposes the following technical solution: A variable solventless laminating machine based on different laminating structures, including a frame, arranged sequentially from left to right on the lower part of the frame are the first, second, third, and fourth stations.
the lower right of the first station is equipped with the first unwinding unit, and the middle left of the first station has the first coating unit; the upper right of the first station is equipped with the first tension control unit, positioned between the first unwinding unit and the first coating unit, and the upper part of the first coating unit is equipped with the second tension control unit;
the lower left and right sides of the second station are respectively equipped with a winding unit and a fourth unwinding unit; the upper left of the second station is equipped with the second laminating unit, while the upper right is equipped with the third tension control unit, with a fourth tension control unit located between the second laminating unit and the winding unit;
the lower right of the third station is equipped with the third unwinding unit, and the middle left has the second coating unit; the upper left of the third station has the first laminating unit, with a fifth tension control unit positioned between the third unwinding unit and the second coating unit, and a sixth tension control unit between the second coating unit and the first laminating unit;
the middle right of the fourth station is equipped with the third coating unit, and the upper left and right are respectively equipped with the seventh and eighth tension control units;
above the frame, corresponding to the position of the second station, a vertical unwinding section is provided with the second unwinding unit installed on it; a ninth tension control unit is arranged between the second unwinding unit and the second laminating unit.

As an improvement, the frame is equipped with a set of idle rollers for the first unwinding webs between the first and second stations; another set of idle rollers for the second unwinding webs is located between the second and third station s; a set of first intermediate path idle rollers is positioned between the third and fourth stations, and a second set of intermediate path idle rollers is positioned between the fourth and second stations; the second set of intermediate path idle roller is located above the first set of intermediate path guide roller.

As an improvement, a first path conversion idle roller is set to the right of the first tension control unit in the first station, and a second path conversion idle roller is set to the left of the seventh tension control unit in the fourth station

As an improvement, in the control program of the laminating machine, the motor speed of the second laminating unit is set to level 0 main control speed; the motor speeds of the first coating unit, the third coating unit, the second unwinding unit, and the winding unit are all set to level 1 control speed; the motor speeds of the first laminating unit and the first unwinding unit are set to level 2 control speed; the motor speeds of the fourth unwinding unit and the second coating unit are set to level 3 control speed; and the motor speed of the third unwinding unit is set to level 4 control speed; the control relationship is such that level 4 follows level 3, level 3 follows level 2, level 2 follows level 1, and level 1 follows level 0.

The invented related method of process-switch for the variable solventless laminating machine based on different laminating structures:
(A) When the product is a four-layer laminating structures such as PET/AL/NY/RCPP or PET/NY/AL/RCPP, operating mode 1 is adopted: When the sequence of laminating structures from outside to inside is PET/AL/NY/RCPP, the four webs reels of PET, AL, NY, and RCPP are placed respectively at the unwinding positions of the first unwinding unit, the second unwinding unit, the third unwinding unit, and the fourth unwinding unit; when the sequence of laminating structures from outside to inside is PET/NY/AL/RCPP, the four webs reels of PET, NY, AL, and RCPP are placed respectively at the unwinding positions of the fourth unwinding unit, the third unwinding unit, the second unwinding unit, and the first unwinding unit; the process employs coating with adhesive on the single-sided of web from the first unwinding unit and double-sided of web from the third unwinding unit with two laminating processes: The web of NY is unwound from the third unwinding unit and its material tape is guided into the second coating unit for coating with adhesive on the first side; the web of RCPP or PET is unwound from the fourth unwinding unit, and its material tape is guided via the idle roller set for the second unwinding unit into the first laminating unit to laminate with the NY material tape guided from the second coating unit; the laminated double-layer material tape is guided through the first intermediate path idle roller set into the third coating unit, where the second side of the NY web is coated with adhesive; the double-layer material tape is then guided through the second intermediate path idle roller set into the second laminating unit; the web of PET or RCPP is unwound from the first unwinding unit and its material tape is guided into the first coating unit for coating with adhesive; after coating, the material tape is guided through the idle roller set for the first unwinding unit into the second laminating unit; the web of AL is unwound from the second unwinding unit, and its material tape is directly guided into the second laminating unit; the four layers of webs are pressed together in the second laminating unit and enter the winding unit to complete the lamination;
(B) When the product is a three-layer laminating structures such as PET/AL/CPP or PET/AL/PE, operating mode 2 is adopted: When the laminating structures sequence from outside to inside is PET/AL/CPP, the three webs reels of PET, AL, and CPP are placed respectively at the unwinding positions of the first unwinding unit, the second unwinding unit, and the third unwinding unit; when the laminating structures sequence from outside to inside is PET/AL/PE, the three webs reels of PET, AL, and PE are placed respectively at the unwinding positions of the third unwinding unit, the second unwinding unit, and the first unwinding unit; this mode employs coating with adhesive respectively on the single-sided of webs from the first unwinding unit and third unwinding units with a one-time laminating process: The webs of CPP or PET is unwound from the third unwinding unit, and its material tape is guided through the first intermediate path idle roller set into the third coating unit for coating with adhesive; the coated web is then guided through the second intermediate path idle roller set into the second laminating unit; the web of AL is unwound from the second unwinding unit, and its material tape is directly guided into the second laminating unit; the web of PET or PE is unwound from the first unwinding unit, and its material tape is guided into the first coating unit for coating with adhesive; after coating, the material tape is guided through the idle roller set for the first unwinding unit into the second laminating unit; the three layers of webs are pressed together in the second laminating unit and enter the winding unit to complete the lamination;
(C) When the product is a three-layer laminating structures such as PET/VMPET/PE or BOPP/VMPET/CPP, operating mode 3 is adopted: When the laminating structures sequence from outside to inside is PET/VMPET/PE, the three webs reels of PET, VMPET, and PE are placed respectively at the unwinding positions of the first unwinding unit, the third unwinding unit, and the fourth unwinding unit; when the laminating structures sequence from outside to inside is BOPP/VMPET/CPP, the three webs reels of BOPP, VMPET, and CPP are placed respectively at the unwinding positions of the fourth unwinding unit, the third unwinding unit, and the first unwinding unit, or at the unwinding positions of the first, third, and fourth unwinding units; this mode employs coating with adhesive respectively on the single-sided of webs from the first and third unwinding unit with two laminating processes: The web of VMPET is unwound from the third unwinding unit, and its material tape is guided into the second coating unit for coating with adhesive; after coating, the material tape is guided into the first laminating unit; the web of PE, BOPP, or CPP is unwound from the fourth unwinding unit, and its material tape is guided through the idle rollers for econd unwinding web into the first laminating unit to laminate with the web of VMPET from the second coating unit; the laminated double-layer material tape is guided through the idle roller set of first intermediate path, the seventh tension control unit, and the idle roller set of second intermediate path into the second laminating unit; the webs of PET, BOPP, or CPP is unwound from the first unwinding unit, and its material tape is guided into the first coating unit for coating with adhesive; after coating, the material tape is guided through the idle roller set of the first unwinding unit into the second laminating unit; the three layers of webs are pressed together in the second laminating unit and enter the winding unit to complete the lamination;
(D) When the product is a three-layer laminating structures such as PET/PVC/PVC, operating mode 4 is adopted: The three-layer webs reels are placed respectively at the unwinding positions of the fourth, third, and first unwinding units; this mode employs coating with adhesive respectively on the single-sided of PVC webs from the first and third unwinding unit with two-step laminating processes: The web of PVC is unwound from the third unwinding unit, and its material tape is guided into the second coating unit for coating with adhesive; after coating, the material tape is guided into the first laminating unit; the web of PET is unwound from the fourth unwinding unit, and its material tape is guided through the idle roller set of second unwinding unit into the first laminating unit to laminate with the web of PVC from the second coating unit; the laminated two-layer material tape is guided through the idle roller set of first intermediate path into the third coating unit, where the second side of the PVC is coated with adhesive; after the second coating process, the double-layer of webs is guided through the idle roller set of second intermediate path into the second laminating unit; the web of PVC is unwound from the first unwinding unit, and its material tape is guided into the first coating unit for coating with adhesive; after coating, the material tape is guided through the idle roller set for the first unwinding unit into the second laminating unit; the three layers of webs are pressed together in the second laminating unit and enter the winding unit to complete the lamination;
(E) When the product is a three-layer laminating web such as Drawn Film/PET/VMPET, operating mode 5 is adopted: The three webs reels are placed respectively at the unwinding positions of the fourth, third, and first unwinding units; this mode employs double-sided coating of the PET material tape from the third unwinding unit with two-step laminating processes: The web of PET is unwound from the third unwinding unit, and its material tape is guided into the second coating unit for coating with adhesive; after coating, the material tape is guided into the first laminating unit; the web of VMPET is unwound from the fourth unwinding unit, and its material tape is guided through the idle roller set of second unwinding unit into the first laminating unit to laminate with the web of PET from the second coating unit; the laminated two-layer webs is guided through the idle roller set of first intermediate path into the third coating unit, where the second side of the web of PET is coated with adhesive; after the second coating process, the double-layer web is guided through the idle roller set of second intermediate path into the second laminating unit; the web of Drawn Film is unwound from the first unwinding unit, and its material tape is guided through the idle roller set for the first unwinding unit into the second laminating unit; the three layers of webs are pressed together in the second laminating unit and enter the winding unit to complete the lamination;
(F) When the product is a two-layer laminating web such as PET/PE, operating mode 6 is adopted: The two webs reels are placed respectively at the unwinding positions of the first and fourth unwinding units; this mode employs single-sided coating of the PET material tape from the first unwinding unit with a one-time laminating process: The web of PET is unwound from the first unwinding unit, and its material tape is guided into the first coating unit for coating with adhesive; after coating, the material tape is guided through the idle roller set for the first unwinding unit into the second laminating unit; the web of PE is unwound from the fourth unwinding unit, and its material tape is guided into the second laminating unit to laminate with the web of PET from the first coating unit; the two layers of webs are pressed together in the second laminating unit and enter the winding unit to complete the lamination;
(G) When the product is a two-layer laminating web of PET/VMPET, operating mode seven is adopted: The two webs reels are placed at the unwinding positions of the third unwinding unit and the fourth unwinding unit, and a process is used where the web of PET from the third unwinding unit is coated with adhesive, followed by two-steps laminating processes: The web of PET is unwound from the third unwinding unit, and its material tape is guided into the second coating unit for coating with adhesive; after coating, the material tape is guided into the first laminating unit; the web of VMPET is unwound from the fourth unwinding unit, and its material tape is guided into the first laminating unit to laminate with the web of PET from the first coating unit; the laminated two-layer web is guided through the idle roller set of first intermediate path, the seventh tension control unit, and the idle roller set of second intermediate path, and then into the second laminating unit for a second pressing process; the two layers of web are pressed together in the second laminating unit and then enter the winding unit to complete the lamination.

The beneficial effects of the present invention compared to the current technical are as follows:
(1) A single machine can be converted into seven different laminating modes, meeting the needs of seven laminating processes. This significantly expands the production capacity and supply range of manufacturers, thereby increasing the competitiveness of the company.
(2) Some laminating modes achieve effects that cannot be reached by standard laminating machines even with multiple passes. These laminating modes and processes offer more precise and broader choices for soft packaging designers and manufacturers.
(3) The machine can complete the lamination of up to four layers of webs in a single pass, meeting the needs of the most common multi-layer soft packaging laminating structures currently available.

### Description of the Drawings

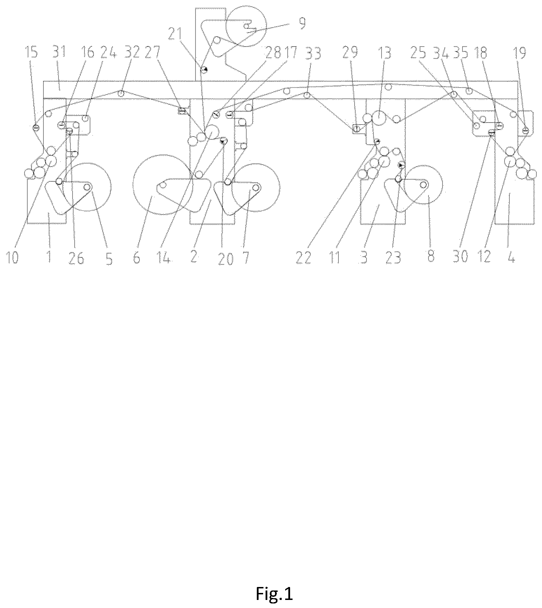

Figure 1 is the overall process route of a variable solventless laminating machine based on different laminating structures.
Figure 2 is the process route diagram of operating mode one of the variable solventless laminating machine.
Figure 3 is the process route diagram of operating mode two of the variable solventless laminating machine.
Figure 4 is the process route diagram of operating mode three of the variable solventless laminating machine.
Figure 5 is the process route diagram of operating mode four of the variable solventless laminating machine.
Figure 6 is the process route diagram of operating mode five of the variable solventless laminating machine.
Figure 7 is the process route diagram of operating mode six of the variable solventless laminating machine.
Figure 8 is the process route diagram of operating mode seven of the variable solventless laminating machine.
Figure 9 is the diagram of the second laminating unit in the second configuration.

### Detailed Description

The following provides further explanation of this utility model in conjunction with the accompanying figures.

A variable solventless laminating machine based on different laminating structures, including a frame (31), arranged sequentially from left to right on the lower part of the frame are the first unit (1), second unit (2), third unit (3), and fourth unit (4).

On the lower right side of the first unit (1), there is a first unwinding unit (5), and on the left middle side, there is a first coating unit (10). On the upper right side of the first unit, there is a first tension control unit (16), which is located between the first unwinding unit (5) and the path of the first coating unit (10). Above the first coating unit (10), there is a second tension control unit (15).

On the left and right lower sides of the second unit (2), there are a winding unit (6) and a fourth unwinding unit (7) respectively. On the upper left side of the second unit (2), there is a second laminating unit (14), and on the upper right side, there is a third tension control unit (17). Between the second laminating unit (14) and the winding unit (6), there is a fourth tension control unit (20).

On the lower right side of the third unit (3), there is a third unwinding unit (8), and on the middle left side, there is a second coating unit (11). Above the left side of the third unit (3), there is a first laminating unit (13). Between the third unwinding unit (8) and the second coating unit (11), there is a fifth tension control unit (23). Between the second coating unit (11) and the first laminating unit (13), there is a sixth tension control unit (22).

On the middle right side of the fourth unit (4), there is a third coating unit (12), and on both the left and right upper sides, there are a seventh tension control unit (18) and an eighth tension control unit (19) respectively.

Above the frame, corresponding to the second unit's position, a vertical unwinding component is installed, which includes a second unwinding unit (9). Between the second unwinding unit (9) and the second laminating unit (14), a ninth tension control unit (21) is provided.

Between the first unit (1) and the second unit (2) on the frame, there is a guide roller set (32) for the first unwound base material. Between the second unit (2) and the third unit (3) on the frame, there is another guide roller set (33) for the second unwound base material. Between the third unit (3) and the fourth unit (4) on the frame, there is a first intermediate path guide roller set (34). Between the fourth unit (4) and the second unit (2) on the frame, there is a second intermediate path guide roller set (35), which is positioned above the first intermediate path guide roller set (34).

The first tension control unit (16) contains a first adjusting roller assembly (26), while the guide roller set (32) for the first unwound base material includes a second adjusting roller assembly (27). The second intermediate path guide roller set (35) includes a third adjusting roller assembly (28), and the guide roller set (33) for the second unwound base material includes a fourth adjusting roller assembly (29). The seventh tension control unit (18) contains a fifth adjusting roller assembly (30). To the right of the first tension control unit (16), there is a first path conversion guide roller (24), and to the left of the seventh tension control unit (18), there is a second path conversion guide roller (25).

The laminating machine of this invention also includes an electrical circuitry and control program. In the control program of the laminating machine, the motor speed of the second laminating unit is set to level 0 main control speed; the motor speeds of the first coating unit, the third coating unit, the second unwinding unit, and the winding unit are all set to level 1 control speed; the motor speeds of the first laminating unit and the first unwinding unit are set to level 2 control speed; the motor speeds of the fourth unwinding unit and the second coating unit are set to level 3 control speed; and the motor speed of the third unwinding unit is set to level 4 control speed. The control relationship is such that level 4 follows level 3, level 3 follows level 2, level 2 follows level 1, and level 1 follows level 0.

Physically, there is a provision for upgrading the motor speeds of the first laminating unit, the first unwinding unit, and the fourth unwinding unit to level 1 control speed, and the motor speed of the third unwinding unit to level 2 control speed. During frequency signal control, the control modes for the first coating unit motor speed, the second coating unit motor speed, and the first laminating unit motor speed are reserved for disconnection. In the physical wiring and control mode, the motor speed of the third unwinding unit can receive control signals from both the fourth tension control unit and the seventh tension control unit. The control touch screen of the laminating machine is equipped with selection/deselection functions for the above units.

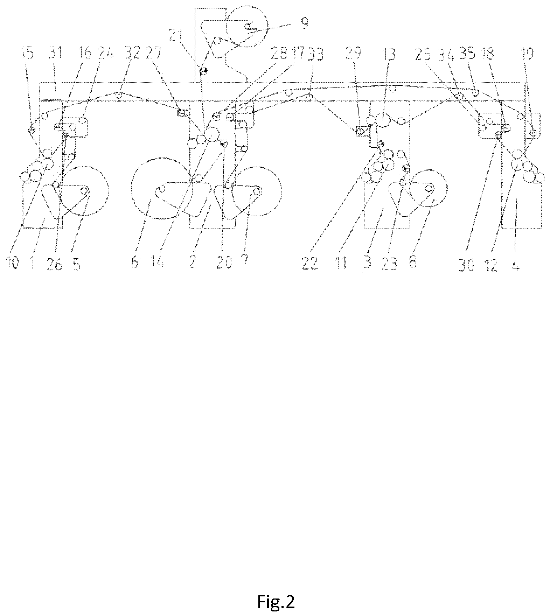

As shown in Figure 2, the laminating process for Operation Mode 1 of the variable solventless laminating machine is as follows: When the laminating structure sequence from outer to inner is PET/AL/NY/RCPP, the four base material rolls of PET, AL, NY, and RCPP are placed in the machine at the first unwinding unit (5), second unwinding unit (9), third unwinding unit (8), and fourth unwinding unit (7) respectively. When the laminating structure sequence is PET/NY/AL/RCPP, the four base material rolls of PET, NY, AL, and RCPP are placed in the machine at the fourth unwinding unit (7), third unwinding unit (8), second unwinding unit (9), and first unwinding unit (5) respectively. The process involves single-side coating and double-side coating of the material belts from the first unwinding unit (5) (PET or RCPP) and the third unwinding unit (9) (NY) and two laminating processes. During the laminating production, all functional units of the machine are involved. The base material (NY) is unwound at the third unwinding unit (8) and its material belt is fed into the second coating unit (11) for first-side coating. The base material (RCPP or PET) is unwound at the fourth unwinding unit (7), and its material belt is guided through the guide roller set for the second unwinding base material into the first laminating unit (13) to be combined with the material belt (NY) from the second coating unit (11). The laminating double-layer material belt is then fed through the first intermediate path guide roller set into the third coating unit (12) for second-side coating of the material belt (NY). Subsequently, it is guided through the second intermediate path guide roller set into the second laminating unit (14). The base material (PET or RCPP) is unwound at the first unwinding unit (5) and its material belt is fed into the first coating unit (10) for coating. After coating, it is guided through the guide roller set for the first unwinding base material into the second laminating unit (14). The base material AL is unwound at the second unwinding unit (9) and its material belt is directly fed into the second laminating unit (14). The four base materials are then laminated together in the second laminating unit (14) and wound up in the winding unit (6) to complete the laminating process.

The membrane paths for Operation Mode 1 of the variable solventless laminating machine are as follows:
The base material from the first unwinding unit (5) passes through the first tension control unit (16) → first coating unit (10) → second tension control unit (15) → guide roller set for the first unwinding base material (32) → second laminating unit (14), forming the first base material path for Operation Mode 1.

The base material from the second unwinding unit (9) passes through the ninth tension control unit (21) → second laminating unit (14), forming the second base material path for Operation Mode 1.

The base material from the third unwinding unit (8) passes through the fifth tension control unit (23) → second coating unit (11) → sixth tension control unit (22) → first laminating unit (13), forming the third base material path for Operation Mode 1.

The base material from the fourth unwinding unit (7) passes through the third tension control unit (17) → guide roller set for the second unwinding base material (33) → first laminating unit (13), forming the fourth base material path for Operation Mode 1.

The first laminating unit (13) → first intermediate path guide roller set (34) → seventh tension control unit (18) → third coating unit (12), forming the fifth base material path for Operation Mode 1.

The third coating unit (12) → eighth tension control unit (19) → second intermediate path guide roller set (35) → second laminating unit (14), forming the sixth base material path for Operation Mode 1.

The second laminating unit (14) → fourth tension control unit (20) → winding unit (6), forming the seventh base material path for Operation Mode 1.

In a four-layer laminating structure, aluminum foil (AL) is generally included. Whether AL is in the second or third layer, Operation Mode 1 allows the AL roll to be placed in the second unwinding unit (9) and fed into the second laminating unit (14) via the shortest path.

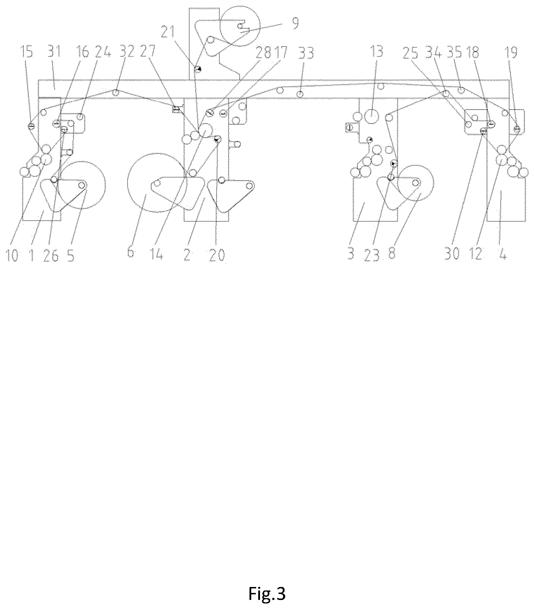

As shown in Figure 3, the laminating process for Operation Mode 2 of the variable solventless laminating machine is as follows: When the laminating structure sequence from outer to inner is PET/AL/CPP, the three base material rolls of PET, AL, and CPP are placed in the machine at the first unwinding unit (5), second unwinding unit (9), and third unwinding unit (8) respectively. When the laminating structure sequence from outer to inner is PET/AL/PE, the three base material rolls of PET, AL, and PE are placed in the machine at the third unwinding unit (8), second unwinding unit (9), and first unwinding unit (5) respectively. This process adopts a single-side coating and one-time laminating process with the material belts from the first unwinding unit (5) (PET or PE) and the third unwinding unit (8) (CPP or PET). During laminating production, the second coating unit (11), the first laminating unit (13), and the fourth unwinding unit do not participate. The base material (CPP or PET) is unwound at the third unwinding unit (8) and its material belt is fed through the first intermediate path guide roller set into the third coating unit (12) for coating. The coated material belt is then fed through the second intermediate path guide roller set into the second laminating unit (14). The base material (AL) is unwound at the second unwinding unit (9) and its material belt is directly fed into the second laminating unit (14). The base material (PET or PE) is unwound at the first unwinding unit (5) and its material belt is fed into the first coating unit (10) for coating. After coating, it is guided through the guide roller set for the first unwinding base material into the second laminating unit (14). The three base materials are laminated together in the second laminating unit (14) and then fed into the winding unit (6) to complete the laminating process.

The membrane paths for Operation Mode 2 of the variable solventless laminating machine are as follows:
The base material from the first unwinding unit (5) passes through the first tension control unit (16) → first coating unit (10) → second tension control unit (15) → guide roller set for the first unwinding base material (32) → second laminating unit (14), forming the first base material path for Operation Mode 2.

The base material from the second unwinding unit (9) passes through the ninth tension control unit (21) → second laminating unit (14), forming the second base material path for Operation Mode 2.

The base material from the third unwinding unit (8) passes through the first intermediate path guide roller set (34) → seventh tension control unit (18) → third coating unit (12) → eighth tension control unit (19) → second intermediate path guide roller set (35) → second laminating unit (14), forming the third base material path for Operation Mode 2.

The second laminating unit (14) → fourth tension control unit (20) → winding unit (6), forming the fourth base material path for Operation Mode 2.

Operation Mode 2 also has two material roll placement options, allowing the PE roll, which is prone to elongation, to be placed in the unwinding unit with the shortest path.

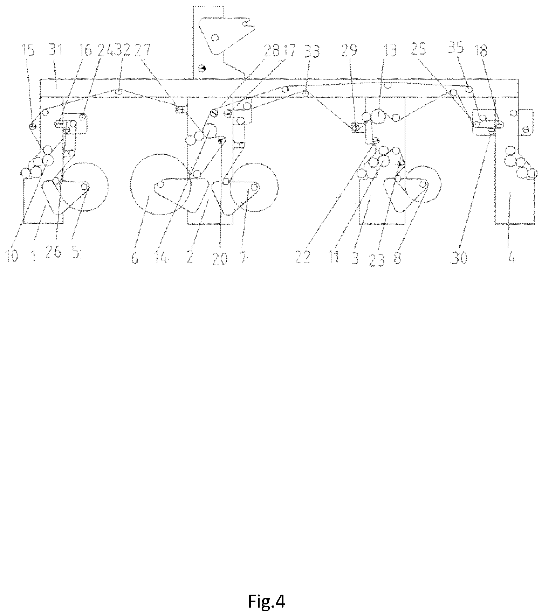

As shown in Figure 4, the laminating process for Operation Mode 3 of the variable solventless laminating machine is as follows: When the laminating structure sequence from outer to inner is PET/VMPET/PE, the three base material rolls of PET, VMPET, and PE are placed in the machine at the first unwinding unit (5), third unwinding unit (8), and fourth unwinding unit (7) respectively. When the laminating structure sequence from outer to inner is BOPP/VMPET/CPP, the three base material rolls of BOPP, VMPET, and CPP are placed in the machine at the fourth unwinding unit (7), third unwinding unit (8), and either the first unwinding unit (5) or the first unwinding unit (5), third unwinding unit (8), and fourth unwinding unit (7) respectively. This process uses a single-side coating and two-time laminating process with the material belts from the first unwinding unit (5) (PET or BOPP, CPP) and the third unwinding unit (8) (VMPET). During the laminating production, the second unwinding unit (9) and the third coating unit (12) do not participate. The base material (VMPET) is unwound at the third unwinding unit (8) and its material belt is fed through the second coating unit (11) for coating. The coated material belt is then fed into the first laminating unit (13). The base material (PE or BOPP, CPP) is unwound at the fourth unwinding unit (7) and its material belt is guided through the guide roller set for the second unwinding base material into the first laminating unit (13) to laminating with the material belt (VMPET) from the second coating unit (11). The laminating double-layer material belt is then guided through the first intermediate path guide roller set (34), the seventh tension control unit (18), and the second intermediate path guide roller set (35) into the second laminating unit (14). The base material (PET or BOPP, CPP) is unwound at the first unwinding unit (5) and its material belt is fed into the first coating unit (10) for coating. After coating, it is guided through the guide roller set for the first unwinding base material (32) into the second laminating unit (14). The three base materials are laminated together in the second laminating unit (14) and then fed into the winding unit (6) to complete the laminating process.

The membrane paths for Operation Mode 3 of the variable solventless laminating machine are as follows:
The base material from the first unwinding unit (5) passes through the first tension control unit (16) → first coating unit (10) → second tension control unit (15) → guide roller set for the first unwinding base material (32) → second laminating unit (14), forming the first base material path for Operation Mode 3.

The base material from the third unwinding unit (8) passes through the fifth tension control unit (23) → second coating unit (11) → sixth tension control unit (22) → first laminating unit (13), forming the second base material path for Operation Mode 3.

The base material from the fourth unwinding unit (7) passes through the third tension control unit (17) → guide roller set for the second unwinding base material (33) → first laminating unit (13), forming the third base material path for Operation Mode 3.

The first laminating unit (13) → first intermediate path guide roller set (34) → second path conversion guide roller (25) → seventh tension control unit (18) → second intermediate path guide roller set (35) → second laminating unit (14), forming the fourth base material path for Operation Mode 3.

The second laminating unit (14) → fourth tension control unit (20) → winding unit (6), forming the fifth base material path for Operation Mode 3.

Operation Mode 3 also provides two options for material roll placement. The PE roll, which is prone to elongation, can be placed in the unwinding unit with the shortest path or in a unit that does not require coating.

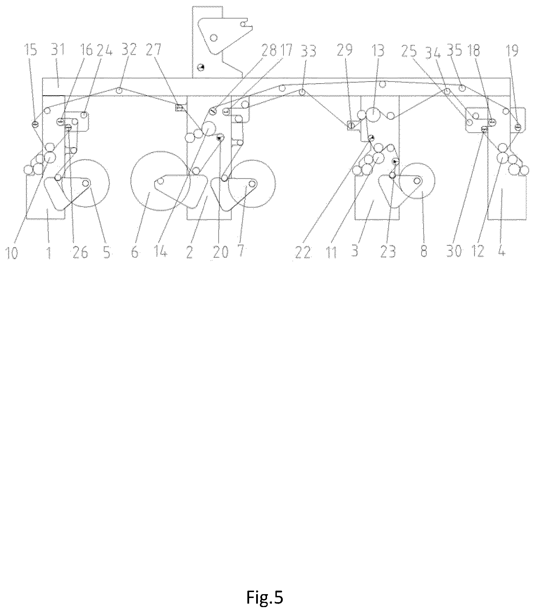

As shown in Figure 5, The laminating process for Operation Mode 4 of the variable solventless laminating machine is as follows: When the product is a three-layer laminating structure of PET/PVC/PVC, the three base material rolls are placed in the machine at the fourth unwinding unit (7), third unwinding unit (8), and first unwinding unit (5) respectively. This mode uses a single-side coating on the PVC material belt from the first unwinding unit (5) and a double-side coating on the PVC material belt from the third unwinding unit (8), with a two-time laminating process. During production, the second unwinding unit is not involved. The base material (PVC) at the third unwinding unit (8) is unwound and its material belt is fed into the second coating unit (11) for coating. The coated material belt is then fed into the first laminating unit (13). The base material (PET) at the fourth unwinding unit (7) is unwound and its material belt is guided through the guide roller set for the second unwinding base material (33) into the first laminating unit (13) to laminating with the PVC material belt from the second coating unit (11). The laminating double-layer material belt is then guided through the first intermediate path guide roller set (34) into the third coating unit (12) for coating the second side of the PVC. The double-coated material belt is then guided through the second intermediate path guide roller set (35) into the second laminating unit (14). The base material (PVC) at the first unwinding unit (5) is unwound and its material belt is fed into the first coating unit (10) for coating. After coating, it is guided through the guide roller set for the first unwinding base material (32) into the second laminating unit (14). The three base materials are laminated together in the second laminating unit (14) and then fed into the winding unit (6) to complete the laminating process.

The membrane paths for Operation Mode 4 of the variable solventless laminating machine are as follows:
The base material from the first unwinding unit (5) passes through the first tension control unit (16) → first coating unit (10) → second tension control unit (15) → guide roller set for the first unwinding base material (32) → second laminating unit (14), forming the first base material path for Operation Mode 4.

The base material from the third unwinding unit (8) passes through the fifth tension control unit (23) → second coating unit (11) → sixth tension control unit (22) → first laminating unit (13), forming the second base material path for Operation Mode 4.

The base material from the fourth unwinding unit (7) passes through the third tension control unit (17) → guide roller set for the second unwinding base material (33) → first laminating unit (13), forming the third base material path for Operation Mode 4.

The first laminating unit (13) → first intermediate path guide roller set (34) → seventh tension control unit (18) → third coating unit (12), forming the fourth base material path for Operation Mode 4.

The third coating unit (12) → eighth tension control unit (19) → second intermediate path guide roller set (35) → second laminating unit (14), forming the fifth base material path for Operation Mode 4.

The second laminating unit (14) → fourth tension control unit (20) → winding unit (6), forming the sixth base material path for Operation Mode 4.

Operation Mode 4 is characterized by applying coating on both sides of the second and third layers of the three-layer laminating structure, increasing the coating thickness between these two layers.

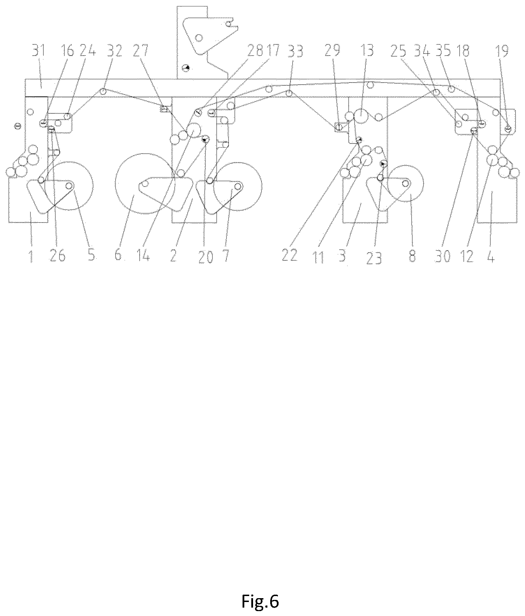

As shown in Figure 6, the laminating process for Operation Mode 5 of the variable solventless laminating machine is as follows: When the product is a three-layer laminating structure of Stretch Film/PET/VMPET, the three base material rolls are placed in the machine at the fourth unwinding unit (7), third unwinding unit (8), and first unwinding unit (5) respectively. This mode uses a double-side coating on the PET material belt from the third unwinding unit (8) and a two-time laminating process. During production, the second unwinding unit (9) and the first coating unit (10) are not involved. The base material (PET) at the third unwinding unit (8) is unwound and its material belt is fed into the second coating unit (11) for coating. The coated material belt is then fed into the first laminating unit (13). The base material (VMPET) at the fourth unwinding unit (7) is unwound and its material belt is guided through the guide roller set for the second unwinding base material (33) into the first laminating unit (13) to laminating with the PET material belt from the second coating unit (11). The laminating double-layer material belt is then guided through the first intermediate path guide roller set (34) into the third coating unit (12) for coating the second side of the PET. After the second coating, the double-layer base material is guided through the second intermediate path guide roller set (35) into the second laminating unit (14). The base material (Stretch Film) at the first unwinding unit (5) is unwound and its material belt is fed through the guide roller set for the first unwinding base material (32) into the second laminating unit (14). The three base materials are laminated together in the second laminating unit (14) and then fed into the winding unit (6) to complete the laminating process.

The membrane paths for Operation Mode 5 of the variable solventless laminating machine are as follows:
The base material from the first unwinding unit (5) passes through the first tension control unit (16) → first path conversion guide roller (24) → guide roller set for the first unwinding base material (32) → second laminating unit (14), forming the first base material path for Operation Mode 5.

The base material from the third unwinding unit (8) passes through the fifth tension control unit (23) → second coating unit (11) → sixth tension control unit (22) → first laminating unit (13), forming the second base material path for Operation Mode 5.

The base material from the fourth unwinding unit (7) passes through the third tension control unit (17) → guide roller set for the second unwinding base material (33) → first laminating unit (13), forming the third base material path for Operation Mode 5.

The first laminating unit (13) → first intermediate path guide roller set (34) → seventh tension control unit (18) → third coating unit (12), forming the fourth base material path for Operation Mode 5.

The third coating unit (12) → eighth tension control unit (19) → second intermediate path guide roller set (35) → second laminating unit (14), forming the fifth base material path for Operation Mode 5.

The second laminating unit (14) → fourth tension control unit (20) → winding unit (6), forming the sixth base material path for Operation Mode 5.

Operation Mode 5 is designed for three-layer laminating structures where both the first layer (surface layer) and the third layer (inner layer) should not be coated.

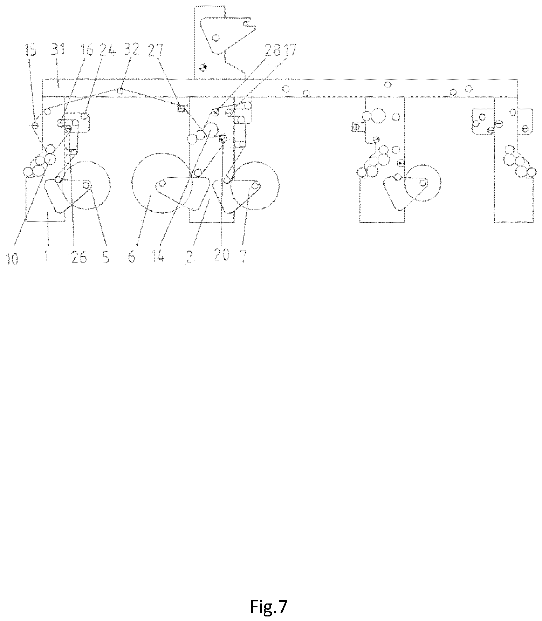

As shown in Figure 7, the laminating process for Operation Mode 6 of the variable solventless laminating machine is as follows: When the product is a two-layer laminating structure of PET/PE, the two base material rolls are placed in the machine at the first unwinding unit (5) and the fourth unwinding unit (7) respectively. This mode uses a coating on the PET material belt from the first unwinding unit (5) and a single-time laminating process. During production, the second unwinding unit (9), third unwinding unit (8), second coating unit (11), and third coating unit (12) are not involved. The base material (PET) at the first unwinding unit (5) is unwound and its material belt is fed into the first coating unit (10) for coating. The coated material belt is then fed through the guide roller set for the first unwinding base material (32) into the second laminating unit (14). The base material (PE) at the fourth unwinding unit (7) is unwound and its material belt is fed directly into the second laminating unit (14) to laminating with the PET material belt from the first coating unit (10). The two base materials are laminated together in the second laminating unit (14) and then fed into the winding unit (6) to complete the laminating process.

The membrane paths for Operation Mode 6 of the variable solventless laminating machine are as follows:
The base material from the first unwinding unit (5) passes through the first tension control unit (16) → first coating unit (10) → second tension control unit (15) → guide roller set for the first unwinding base material (32) → second laminating unit (14), forming the first base material path for Operation Mode 6.

The base material from the fourth unwinding unit (7) passes through the third tension control unit (17) → third adjustment roller assembly (28) → second laminating unit (14), forming the second base material path for Operation Mode 6.

The second laminating unit (14) → fourth tension control unit (20) → winding unit (6), forming the third base material path for Operation Mode 6.

Operation Mode 6 represents the most common functional mode of a standard solventless laminating machine.

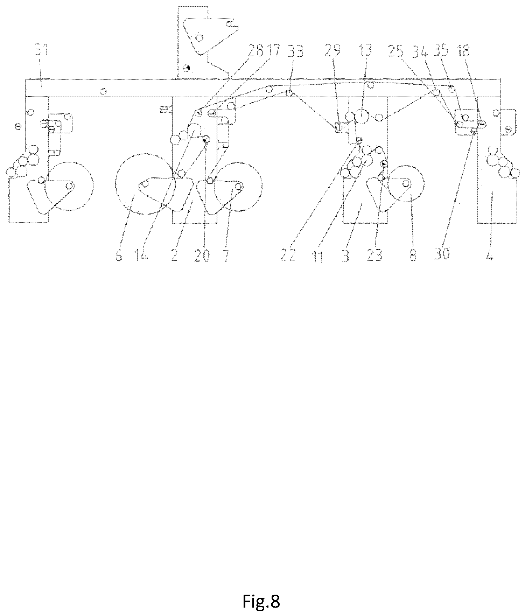

As shown in Figure 8, the laminating process for Operation Mode 7 of the variable solventless laminating machine is as follows: When the product is a two-layer laminating structure of PET/VMPET, the two base material rolls are placed in the machine at the third unwinding unit (8) and the fourth unwinding unit (7) respectively. This mode uses a coating on the PET material belt from the third unwinding unit (8) and a two-time laminating process. During production, the first unwinding unit (5), second unwinding unit (9), the first coating unit (10), and the third coating unit (12) are not involved. The base material (PET) at the third unwinding unit (8) is unwound and its material belt is fed into the second coating unit (11) for coating. The coated material belt is then fed into the first laminating unit (13). The base material (VMPET) at the fourth unwinding unit (7) is unwound and its material belt is fed directly into the first laminating unit (13) to laminating with the PET material belt from the second coating unit (11). The laminating double-layer material belt is then guided through the first intermediate path guide roller set (34), the second intermediate path guide roller set (25), and the seventh tension control unit before being fed into the second laminating unit (14) for a second lamination. The two-layer base materials are laminated together in the second laminating unit (14) and then fed into the winding unit (6) to complete the laminating process.

The membrane paths for Operation Mode 7 of the variable solventless laminating machine are as follows:
The base material from the third unwinding unit (8) passes through the fifth tension control unit (23) → second coating unit (11) → sixth tension control unit (22) → first laminating unit (13), forming the first base material path for Operation Mode 7.

The base material from the fourth unwinding unit (7) passes through the third tension control unit (17) → guide roller set for the second unwinding base material (33) → first laminating unit (13), forming the second base material path for Operation Mode 7.

The first laminating unit (13) → first intermediate path guide roller set (34) → second path conversion guide roller (25) → seventh tension control unit (18) → second intermediate path guide roller set (35) → second laminating unit (14), forming the third base material path for Operation Mode 7.

The second laminating unit (14) → fourth tension control unit (20) → winding unit (6), forming the fourth base material path for Operation Mode 7.

Operation Mode 7 provides a second lamination of the base materials compared to Mode 6.

### Notes for Inventors:

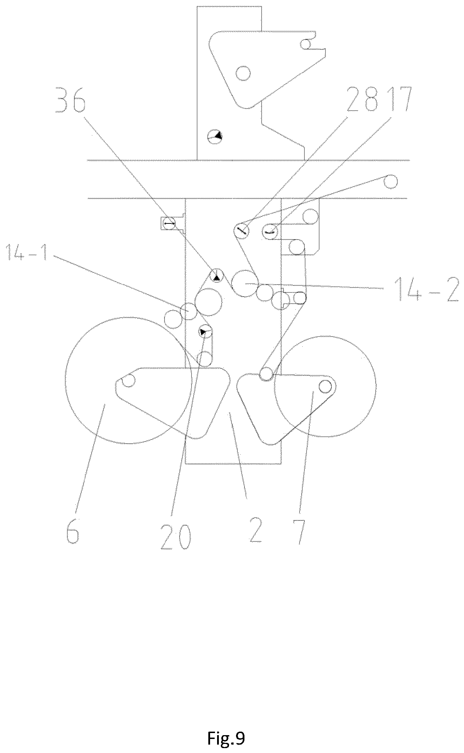

1. Soft packaging laminating structures come in various forms. Each operation mode described above selects one or two typical structures for explanation, but the machine is not limited to producing only these products.
2. The second laminating unit can also be configured as shown in Figure 9, where two laminating units (14-1, 14-2) are arranged sequentially with an additional tenth tension control unit in between. This configuration allows for two lamination passes with the base materials changing the reference.

## Claims

1. A variable solventless laminating machine based on different laminating structures, including a frame, arranged sequentially from left to right on the lower part of the frame are the first, second, third, and fourth stations, **characterized by**:
the lower right of the first station is equipped with the first unwinding unit, and the middle left of the first station has the first coating unit; the upper right of the first station is equipped with the first tension control unit, positioned between the first unwinding unit and the first coating unit, and the upper part of the first coating unit is equipped with the second tension control unit;
the lower left and right sides of the second station are respectively equipped with a winding unit and a fourth unwinding unit; the upper left of the second station is equipped with the second laminating unit, while the upper right is equipped with the third tension control unit, with a fourth tension control unit located between the second laminating unit and the winding unit;
the lower right of the third station is equipped with the third unwinding unit, and the middle left has the second coating unit; the upper left of the third station has the first laminating unit, with a fifth tension control unit positioned between the third unwinding unit and the second coating unit, and a sixth tension control unit between the second coating unit and the first laminating unit;
the middle right of the fourth station is equipped with the third coating unit, and the upper left and right are respectively equipped with the seventh and eighth tension control units;
above the frame, corresponding to the position of the second station, a vertical unwinding section is provided with the second unwinding unit installed on it; a ninth tension control unit is arranged between the second unwinding unit and the second laminating unit.

2. The variable solventless laminating machine based on different laminating structures as claimed in claim 1, **characterized by**: the frame is equipped with a set of idle rollers for the first unwinding webs between the first and second stations; another set of idle rollers for the second unwinding webs is located between the second and third station s; a set of first intermediate path idle rollers is positioned between the third and fourth stations, and a second set of intermediate path idle rollers is positioned between the fourth and second stations; the second set of intermediate path idle roller is located above the first set of intermediate path guide roller.

3. The variable solventless laminating machine based on different laminating structures as claimed in claim 1, **characterized by**: a first path conversion idle roller is set to the right of the first tension control unit in the first station, and a second path conversion idle roller is set to the left of the seventh tension control unit in the fourth station.

4. The variable solventless laminating machine based on different laminating structures as claimed in claim 1, **characterized by**: in the control program of the laminating machine, the motor speed of the second laminating unit is set to level 0 main control speed; the motor speeds of the first coating unit, the third coating unit, the second unwinding unit, and the winding unit are all set to level 1 control speed; the motor speeds of the first laminating unit and the first unwinding unit are set to level 2 control speed; the motor speeds of the fourth unwinding unit and the second coating unit are set to level 3 control speed; and the motor speed of the third unwinding unit is set to level 4 control speed; the control relationship is such that level 4 follows level 3, level 3 follows level 2, level 2 follows level 1, and level 1 follows level 0.

5. A related method of process-switch of the variable solventless laminating machine based on different laminating structures as claimed in claim 1, **characterized by**:
(A) When the product is a four-layer laminating structures such as PET/AL/NY/RCPP or PET/NY/AL/RCPP, operating mode 1 is adopted: When the sequence of laminating structures from outside to inside is PET/AL/NY/RCPP, the four webs reels of PET, AL, NY, and RCPP are placed respectively at the unwinding positions of the first unwinding unit, the second unwinding unit, the third unwinding unit, and the fourth unwinding unit; when the sequence of laminating structures from outside to inside is PET/NY/AL/RCPP, the four webs reels of PET, NY, AL, and RCPP are placed respectively at the unwinding positions of the fourth unwinding unit, the third unwinding unit, the second unwinding unit, and the first unwinding unit; the process employs coating with adhesive on the single-sided of web from the first unwinding unit and double-sided of web from the third unwinding unit with two-step laminating processes: The web of NY is unwound from the third unwinding unit and its material tape is guided into the second coating unit for coating with adhesive on the first side; the web of RCPP or PET is unwound from the fourth unwinding unit, and its material tape is guided via the idle roller set for the second unwinding unit into the first laminating unit to laminate with the NY material tape guided from the second coating unit; the laminated double-layer material tape is guided through the first intermediate path idle roller set into the third coating unit, where the second side of the NY web is coated with adhesive; the double-layer material tape is then guided through the second intermediate path idle roller set into the second laminating unit; the web of PET or RCPP is unwound from the first unwinding unit and its material tape is guided into the first coating unit for coating with adhesive; after coating, the material tape is guided through the idle roller set for the first unwinding unit into the second laminating unit; the web of AL is unwound from the second unwinding unit, and its material tape is directly guided into the second laminating unit; the four layers of webs are pressed together in the second laminating unit and enter the winding unit to complete the lamination;
(B) When the product is a three-layer laminating structures such as PET/AL/CPP or PET/AL/PE, operating mode 2 is adopted: When the laminating structures sequence from outside to inside is PET/AL/CPP, the three webs reels of PET, AL, and CPP are placed respectively at the unwinding positions of the first unwinding unit, the second unwinding unit, and the third unwinding unit; when the laminating structures sequence from outside to inside is PET/AL/PE, the three webs reels of PET, AL, and PE are placed respectively at the unwinding positions of the third unwinding unit, the second unwinding unit, and the first unwinding unit; this mode employs coating with adhesive respectively on the single-sided of webs from the first unwinding unit and third unwinding units with a one-step laminating process: The webs of CPP or PET is unwound from the third unwinding unit, and its material tape is guided through the first intermediate path idle roller set into the third coating unit for coating with adhesive; the coated web is then guided through the second intermediate path idle roller set into the second laminating unit; the web of AL is unwound from the second unwinding unit, and its material tape is directly guided into the second laminating unit; the web of PET or PE is unwound from the first unwinding unit, and its material tape is guided into the first coating unit for coating with adhesive; after coating, the material tape is guided through the idle roller set for the first unwinding unit into the second laminating unit; the three layers of webs are pressed together in the second laminating unit and enter the winding unit to complete the lamination;
(C) When the product is a three-layer laminating structures such as PET/VMPET/PE or BOPP/VMPET/CPP, operating mode 3 is adopted: When the laminating structures sequence from outside to inside is PET/VMPET/PE, the three webs reels of PET, VMPET, and PE are placed respectively at the unwinding positions of the first unwinding unit, the third unwinding unit, and the fourth unwinding unit; when the laminating structures sequence from outside to inside is BOPP/VMPET/CPP, the three webs reels of BOPP, VMPET, and CPP are placed respectively at the unwinding positions of the fourth unwinding unit, the third unwinding unit, and the first unwinding unit, or at the unwinding positions of the first, third, and fourth unwinding units; this mode employs coating with adhesive respectively on the single-sided of webs from the first and third unwinding unit with two-step laminating processes: The web of VMPET is unwound from the third unwinding unit, and its material tape is guided into the second coating unit for coating with adhesive; after coating, the material tape is guided into the first laminating unit; the web of PE, BOPP, or CPP is unwound from the fourth unwinding unit, and its material tape is guided through the idle rollers for econd unwinding web into the first laminating unit to laminate with the web of VMPET from the second coating unit; the laminated double-layer material tape is guided through the idle roller set of first intermediate path, the seventh tension control unit, and the idle roller set of second intermediate path into the second laminating unit; the webs of PET, BOPP, or CPP is unwound from the first unwinding unit, and its material tape is guided into the first coating unit for coating with adhesive; after coating, the material tape is guided through the idle roller set of the first unwinding unit into the second laminating unit; the three layers of webs are pressed together in the second laminating unit and enter the winding unit to complete the lamination;
(D) When the product is a three-layer laminating structures such as PET/PVC/PVC, operating mode 4 is adopted: The three-layer webs reels are placed respectively at the unwinding positions of the fourth, third, and first unwinding units; this mode employs coating with adhesive respectively on the single-sided of PVC webs from the first and third unwinding unit with two-step laminating processes: The web of PVC is unwound from the third unwinding unit, and its material tape is guided into the second coating unit for coating with adhesive; after coating, the material tape is guided into the first laminating unit; the web of PET is unwound from the fourth unwinding unit, and its material tape is guided through the idle roller set of second unwinding unit into the first laminating unit to laminate with the web of PVC from the second coating unit; the laminated two-layer material tape is guided through the idle roller set of first intermediate path into the third coating unit, where the second side of the PVC is coated with adhesive; after the second coating process, the double-layer of webs is guided through the idle roller set of second intermediate path into the second laminating unit; the web of PVC is unwound from the first unwinding unit, and its material tape is guided into the first coating unit for coating with adhesive; after coating, the material tape is guided through the idle roller set for the first unwinding unit into the second laminating unit; the three layers of webs are pressed together in the second laminating unit and enter the winding unit to complete the lamination;
(E) When the product is a three-layer laminating web such as Drawn Film/PET/VMPET, operating mode 5 is adopted: The three webs reels are placed respectively at the unwinding positions of the fourth, third, and first unwinding units; this mode employs double-sided coating of the PET material tape from the third unwinding unit with two-step laminating processes: The web of PET is unwound from the third unwinding unit, and its material tape is guided into the second coating unit for coating with adhesive; after coating, the material tape is guided into the first laminating unit; the web of VMPET is unwound from the fourth unwinding unit, and its material tape is guided through the idle roller set of second unwinding unit into the first laminating unit to laminate with the web of PET from the second coating unit; the laminated two-layer webs is guided through the idle roller set of first intermediate path into the third coating unit, where the second side of the web of PET is coated with adhesive; after the second coating process, the double-layer web is guided through the idle roller set of second intermediate path into the second laminating unit; the web of Drawn Film is unwound from the first unwinding unit, and its material tape is guided through the idle roller set for the first unwinding unit into the second laminating unit; the three layers of webs are pressed together in the second laminating unit and enter the winding unit to complete the lamination;
(F) When the product is a two-layer laminating web such as PET/PE, operating mode 6 is adopted: The two webs reels are placed respectively at the unwinding positions of the first and fourth unwinding units; this mode employs single-sided coating of the PET material tape from the first unwinding unit with a one-time laminating process: The web of PET is unwound from the first unwinding unit, and its material tape is guided into the first coating unit for coating with adhesive; after coating, the material tape is guided through the idle roller set for the first unwinding unit into the second laminating unit; the web of PE is unwound from the fourth unwinding unit, and its material tape is guided into the second laminating unit to laminate with the web of PET from the first coating unit; the two layers of webs are pressed together in the second laminating unit and enter the winding unit to complete the lamination;
(G) When the product is a two-layer laminating web of PET/VMPET, operating mode seven is adopted: The two webs reels are placed at the unwinding positions of the third unwinding unit and the fourth unwinding unit, and a process is used where the web of PET from the third unwinding unit is coated with adhesive, followed by two-step laminating processes: The web of PET is unwound from the third unwinding unit, and its material tape is guided into the second coating unit for coating with adhesive; after coating, the material tape is guided into the first laminating unit; the web of VMPET is unwound from the fourth unwinding unit, and its material tape is guided into the first laminating unit to laminate with the web of PET from the first coating unit; the laminated two-layer web is guided through the idle roller set of first intermediate path, the seventh tension control unit, and the idle roller set of second intermediate path, and then into the second laminating unit for a second pressing process; the two layers of web are pressed together in the second laminating unit and then enter the winding unit to complete the lamination.
